# EUROPEAN PATENT SPECIFICATION

(11) **EP 3 894 119 B1**
(45) Date of publication and mention of the grant of the patent: **18.01.2023**
(21) Application number: 19835528.1
(22) Date of filing: 06.12.2019
(51) Int. Cl.: B23B 31/12, B23B 13/08, B23B 13/12

(54) **GRIPPER AND GUIDE FOR BAR STOCK**
STANGENHALTE- UND GREIFEINHEIT ZUR BESCHICKUNG EINER WERKZEUGMASCHINE
SUPPORT DE BARRE ET UNITÉ DE PRÉHENSION POUR L'ALIMENTATION D'UNE MACHINE-OUTIL

(30) Priority: 10.12.2018 IT 201800010950
(43) Date of publication of application: 20.10.2021
(73) Proprietor: METAL ART DI FRANCO E MAURO TRANQUILLI S.R.L., 60019 Senigallia (IT)
(72) Inventor: TRANQUILLI, Franco, 60019 SENIGALLIA (IT)
(74) Representative: Palestrini, Mauro
(86) International application number: PCT/IT2019/050256
(87) International publication number: WO 2020/121351

(56) References cited:
- CH-A5- 647 968
- FR-A- 1 191 716
- IT-A1- UB20 161 228
- US-A- 4 420 284
- US-A- 4 914 992
- US-A1- 2011 048 184

## Description

### Technical Field

The present invention relates to a bar support and gripping unit according to the preamble of claim 1. An example of such a unit is known from IT UB20 161 228 A1.

### Prior Art Technology

In some types of machine tool in which processing is carried out directly on bars of stock material, the issue of feeding a bar (sometimes as long as a few metres) into the machine tool is tackled and resolved using special bar feeders that guide and feed in the bars in the most appropriate way for the machine tool receiving them.

With certain types of machine tools, including lathes, such bar feeders are essentially provided with: (i) a long, horizontal guide channel suitable for receiving the full length of the bar lying along the channel; and (ii) special thrusting means which - in the relevant machine-controlled phase and in association with the opening and closing of the bar gripping devices of the machine tool - make the bar travel along the channel in such a way as to move towards the spindle and make an end portion pass through the spindle to be specifically machined once it reaches the workspace of the machine tool. When machining is complete, the end portion of the bar, now machined, is cut off and separated from the rest of the bar. The remaining length of the bar stock is then made to travel again through the spindle and all operations mentioned above are cyclically repeated until the useful length of the bar has been exhausted.

Since such bar feeders are placed upstream of the operating spindle and since the entire operating head of the machine tool - among other things - is interposed between these bar feeders and the spindle, the bar - continuously supported on one side by the channel and held by the spindle at its end inserted inside the machine tool - has a span between the bar feeder and the spindle which, free from constraints, is inflectable in its axial plane.

As a result, in addition to the spindle transmitting its own high angular velocity to the entire bar during its operational rotation, geometric eccentricity develops - even where the inflected span has a modest elastic deflection - between the axis of rotation and the median line of the deformed elastic, which is responsible for triggering flexural vibrations of the bar. The vibrations generated in this way proliferate to the bar feeder and the machine tool, and are also transmitted to the surrounding atmosphere in the form of more or less loud noise.

The thinner the bars compared to the length of the span, and/or the higher the eccentricities of the mass of the bar and/or the geometry of the bar compared to the spindle's axis of rotation, the more marked this drawback is.

To counteract this phenomenon, a first measure adopted in the prior art is to adapt the shape of the bar feeder channels to the actual shape and dimensions of the bar's cross-section. This aims to minimise size aspects by limiting, as far as possible, the residual freedom of movement of the bar relative to the channels.

This embodiment includes certain types of bar feeders which are provided with multiple replaceable channels within the same bar feeder structure.

Nevertheless, such a solution is not without its drawbacks. The first drawback is that it means that production on the machine tool must pause for the duration necessary to materially and mechanically replace the channels and the thrusting means fitted in the bar feeder. Negative impacts are felt by the productivity of the machine tool on the one hand and the increased costs of equipping the bar feeders on the other, due to the need to provide ranges of different channels to be used each time according to the specific machining to be carried out.

Secondly, this solution does not provide any useful contribution when bar has a non-circular cross-section, such as when bar has circularity defects or when it is necessary to machine bars with a polygonal - for example: hexagonal, square or rectangular - shape, either with or without a solid or box-shaped cross-section.

Rather than replacing the channels, it is not uncommon, in the practice of many workshops, for the same channel to be continuously used for dissimilarly-shaped groups of bars.

However, such a measure does not always prove to be a solution, as when there are marked differences in the dimensions of the bars, the channels must inevitably be replaced; and where this does not occur, it is often necessary to reduce the rotation speed of the spindle so as to limit the intensity of the vibrations, which can lead to clear diseconomies of production if reduced below the economic cutting speed thresholds of the machine tool.

Another drawback of bar feeders in which bars are continuously fed while supported by a channel, concerns the lubrication system with which the machine is fitted and which is necessary to enable the bar, in particular when rotating on the channel, to be moved in acceptable friction conditions.

Indeed, in this regard the channels are lubricated with a constant circulation of oil. The oil introduced into the channel allows the bar to rotate inside the channel due to the dragging motion imparted by the spindle in conditions of fluid friction, thus preventing the effects of overheating which would otherwise result from the friction heat produced by the moving bar's surface sliding against the stationary surface of the channel. This constant presence of oil brushing the channel entails at least two further drawbacks, on the one hand in the form of a further increase in machinery costs due to the need to equip the bar feeders with a suitable lubrication system, as well as operating costs linked to the high quantities of oil with which the machine must be supplied; and on the other hand in the form of the inevitable dispersion of oil particles in working environments, which, by spraying into the ambient air, are inhaled by the personnel in the vicinity of the machines in operations.

### Background of the Invention

The main aim of the present invention is to circumvent these drawbacks by devising a bar feeder solution which, tooled in a single and invariable way, is able to minimise the conditions which trigger vibrations of the bars being machined and which can obtain this result whatever the girth of the bars being machined and/or even independently of the shape of their cross-section, which may also be non-circular.

Another aim of the invention is to remove the need to lubricate the bars during machining by simplifying the built structure of the bar feeders and making their construction and operation more economical.

According to the invention, such outcomes are achieved by a support and gripping unit, and by a bar feeder, as defined in the accompanying claims.

### Brief Description of the Drawings

The technical characteristics and other advantages of the invention are made clear from the description below with reference to an exemplary embodiment illustrated in the accompanying drawings, wherein:
- Figure 1 is a three-dimensional overview of a bar feeder according to the invention;
- Figure 2 is a partial three-dimensional overview of the bar feeder in Figure 1, shown with some parts removed to better demonstrate others;
- Figure 3 is an overview of an operating unit which is fitted in the bar feeder, shown removed from the bar feeder;
- Figure 4 is an axial overview of the operating unit in Figure 3;
- Figure 5 is a sectional view of the operating unit in Figure 3, sectioned along an axial plane;
- Figure 6 is a sectional view of the operating unit, sectioned along an axial plane orthogonal to the sectional plane in Figure 5
- Figure 7 is a sectional view corresponding to that in Figure 5, wherein the operating unit is shown in a different operating position;
- Figure 8 is a sectional view corresponding to that in Figure 6, showing the operational arrangement of several components of the operating unit;
- Figure 9 is an axial view similar to that in Figure 4, showing a different operational arrangement of several components of the operating unit;
- Figure 10 is a perspective view of an embodiment of a unit according to the invention;
- Figures 11 and 12 are two perspective overviews of the invention in Figure 10, inserted into a bar loader which also forms part of the invention.

### Best Way to Implement the Invention

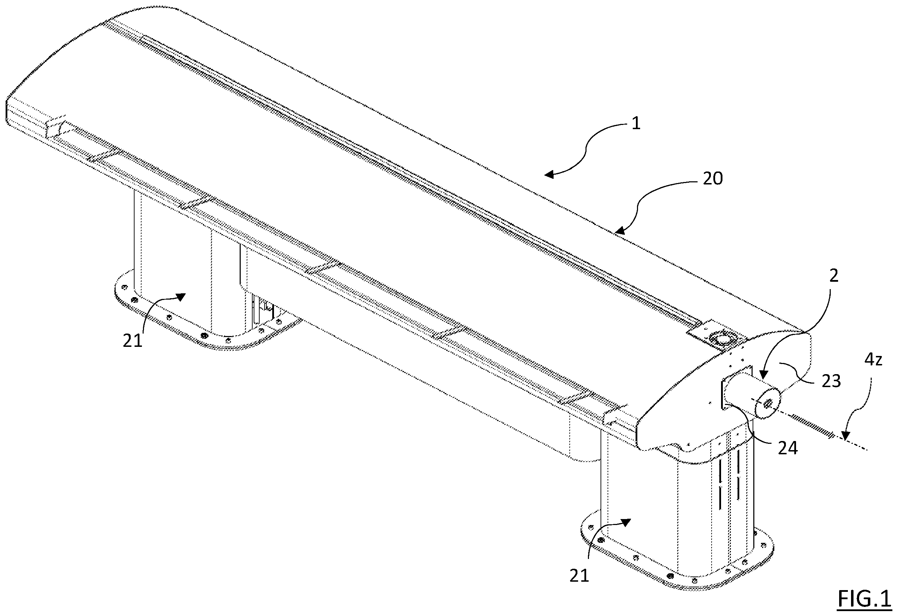

With reference to the figures in the accompanying drawings, Figure 1 shows (1) a bar feeder (3) for a machine tool, which is not shown as it is conventional and assimilable to, for instance, a lathe. The machine tool receiving the bars (3) should be considered as being to the right of the figure, downstream of the bar feeder (1) and in alignment with a feeding line (4z) along which the bar (3) is sent by the bar feeder (1) to the machine tool to be machined by the latter.

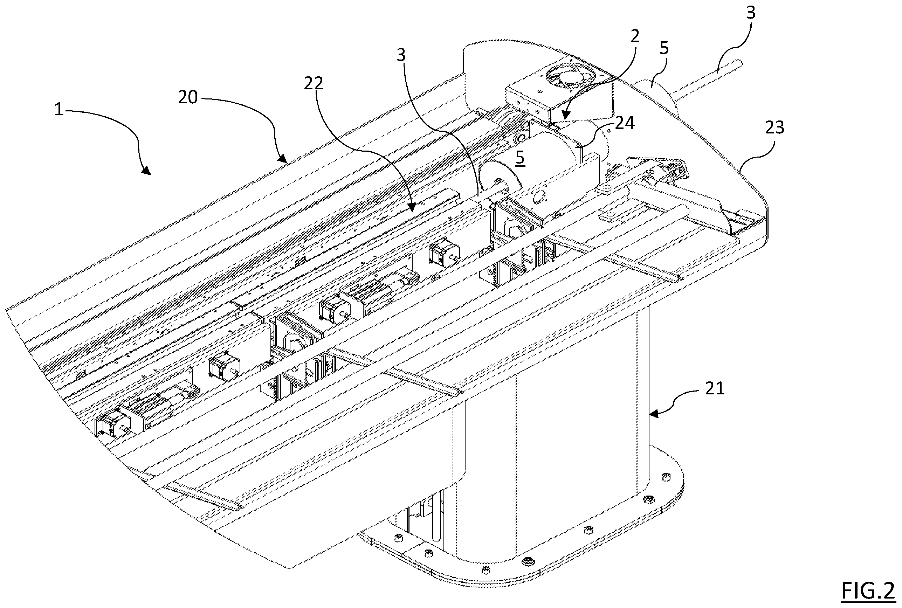

Figure 2 shows that the bar feeder (1) comprises a housing (20), essentially developing horizontally, which is supported by a base provided with two vertical uprights (21). Inside the housing (20), a channel (22) is visible which is suitable for containing the bar (3) as it continuously lies along it and for guiding it, in an entirely known way, horizontally and longitudinally to itself, along the feeding line (4z). The bar (3) is made to travel in a discontinuous motion and in sections along the channel (22), suitably remote controlled by the machine tool receiving the bar (3).

Where two vertical walls (23) cross the housing (20) (only one of which is shown in order to give the drawings greater clarity), the bar feeder (1) comprises a bar (3) support and gripping unit (2) which is aligned on the feeding line (4z) and fastened to the housing (20).

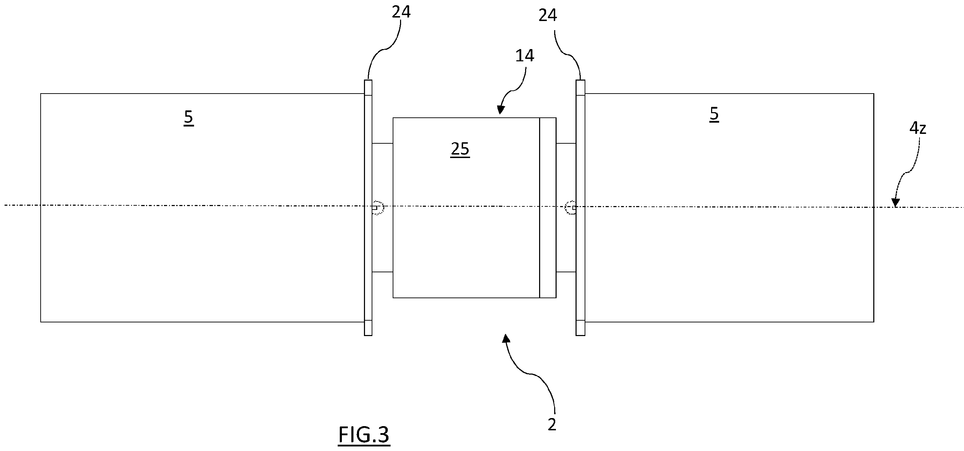

Figure 3 shows that the support and gripping unit (2) includes two tubular shells (5) having a cylindrical shape extending parallel to the feeding line (4z), which are provided with an internal, through-bore (6) coaxial to the direction of the feeding line (4z) itself. Each of the bars (3) succeeding each other along the channel (22) by passing through the feeding line (4z) is made to pass through the two tubular shells (5) and to pass through the internal bore (6) coaxially to the tubular shells (5).

Figure 3 shows, in particular, that the two shells (5) of the support and gripping unit (2) are identical on the outside, and shaped so as to be horizontally supported by the flanges (24), one towards the inside of the bar feeder (1) and the other towards the outside, or to the machine tool being fed.

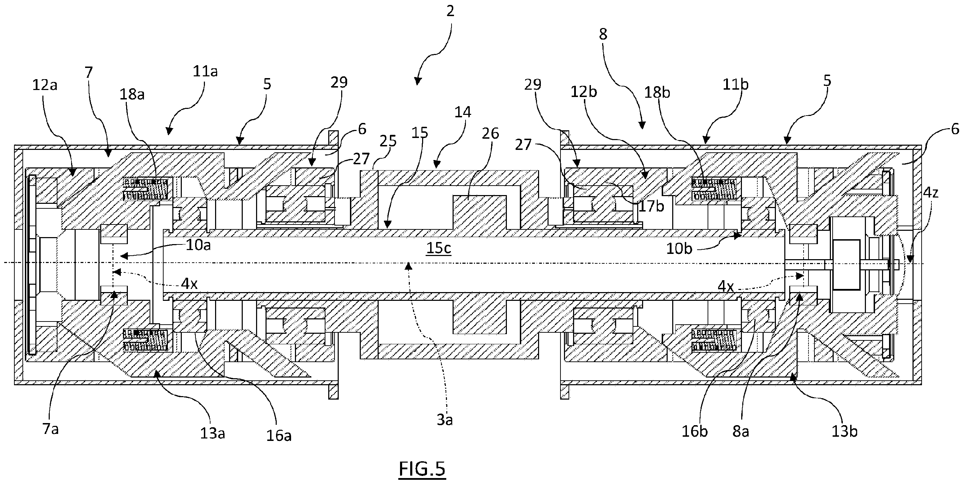

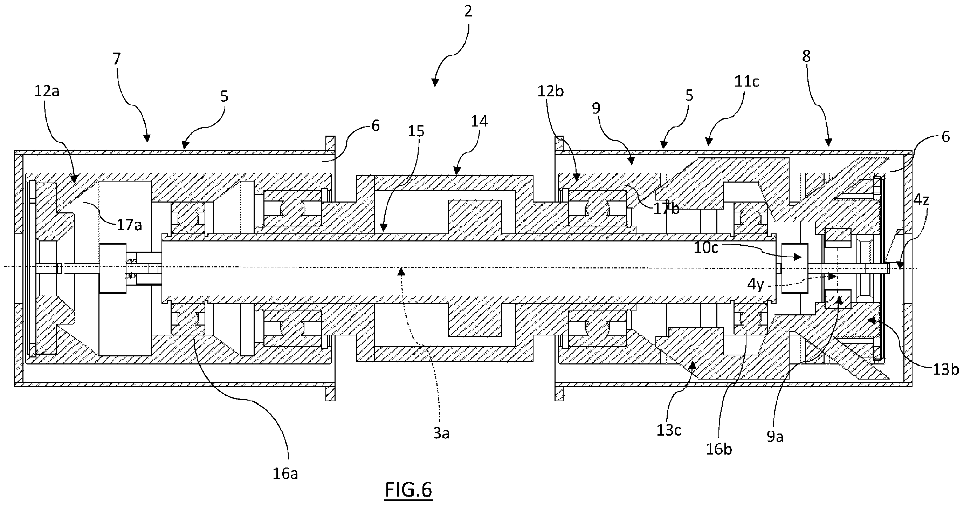

Figure 5 and Figure 6 show that the support and gripping unit (2) comprises two bar (3) chucking members, denoted overall with reference numbers (7) and (8), which are attached to each of the two tubular shells (5), respectively.

The chucking members (7;8) comprise, in particular, three pairs of jaws (7a;8a;9a) which are switchable between two end-of-stroke positions.

In a first position, the jaws (7a;8a;9a) are open at their maximum relative distance according to the directions (4x;4y) transversal to the feeding line (4z) and the bar (3) has free passage longitudinally to itself through the open jaws (7a;8a;9a).

In the second end-of-stoke position, on the other hand, said jaws (7a;8a;9a) are narrow and clenched against the outside of the bar (3).

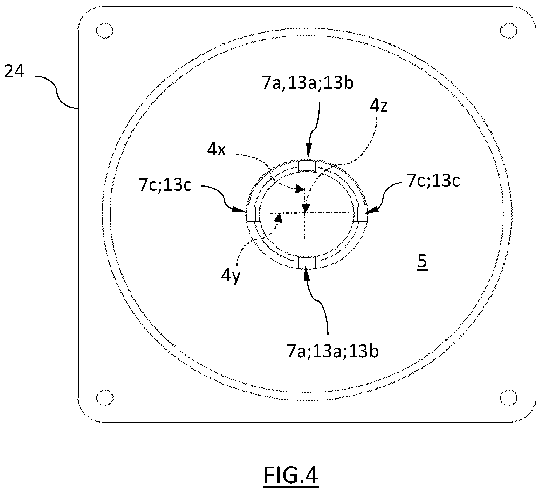

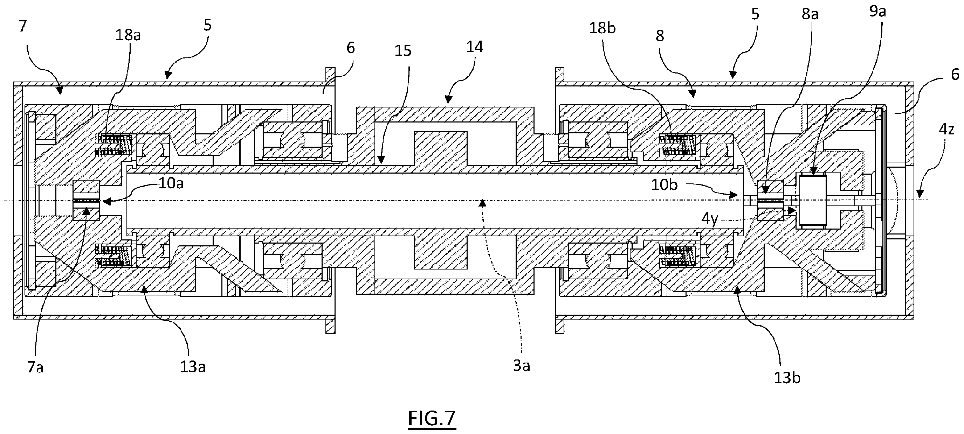

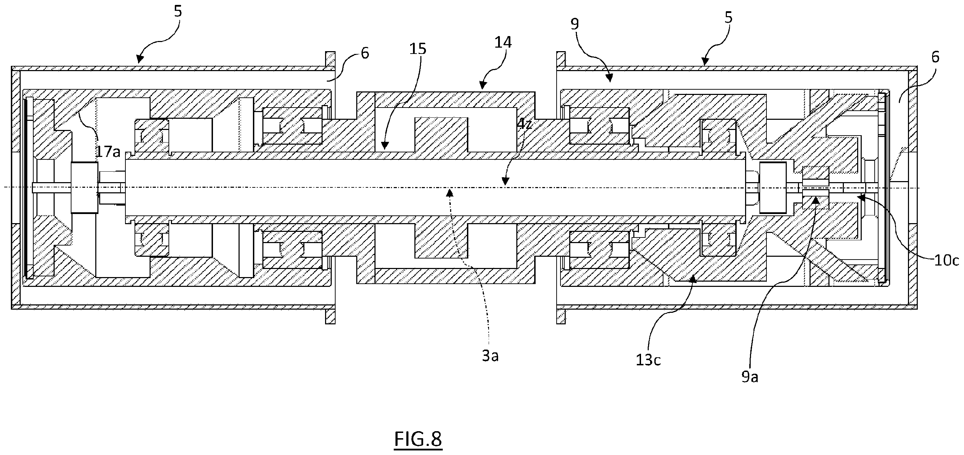

The shells (5) house the clamp (11a;11b;11c) units, which - following a suitable command - are able to grasp the bar (3), which becomes integral to it both with respect to relative directional translation (4z), and, above all (as will be better described below) with respect to the rotation around this direction (4z) which the bar (3) is forced to assume due to the rotational motion imparted on it by the spindle of the machine tool when the latter is in operation, during the machining of the bar (3). Figures 4, 5 and 6 show that, when compared with Figures 7 and 8, two jaws (7a,7b) are preferably located in two different bar (3) gripping zones (10a,10b), which are located consecutively to each other and at a certain distance from each other along the direction of the feeding line (4z).

Furthermore, said two jaws (7a; 8a) are arranged in such a way as to switch between their end-of-stroke positions by approaching and moving away from each other by moving along two parallel directions denoted with (4x).

The third jaw (7c), despite being substantially located in a zone (10c) right next to the gripping zone (10b) of the second jaw (7b), is arranged in such a way as to perform its switching by operating along a third direction (4y) which is transversal and perpendicular to the directions (4x and 4z).

Figure 5 shows that a linear fluid actuator (14) is located between the two tubular shells (5), having a cylindrical body (25) and a tube-shaped shaft (15), of equal cylindricity, having a through-bore (15c) with its longitudinal axis located on the line (4z) along which the bars (3) progress. The shaft (15) projects from the cylindrical body (25), protruding bilaterally along the feeding line (4z). The shaft (15) is equipped with a piston (26), housed inside the cylindrical body (25), which defines bilateral chambers for the loading and unloading of an operating fluid, preferably consisting of pressurised air. The actuator (15) can also be activated other than as described above, and can specifically be activated mechanically and/or electrically.

Two pairs of revolving supports (27,16a,16b) are mounted on the opposing protruding portions of the shaft (15) and rotatably support two hollow cylindrical drums (29), equipped with axial through-bores, around the axis (3a) of the bar (3).

Two revolving end supports (16a,16b), one for each drum (29), are placed distally from the cylindrical body (25) and are integral to the end portions of the cylindrical shaft (15), with the capability to thrust in a direction parallel to the axis of the shaft (15). Two pairs of arms (13a;13b) holding, in counterface to each another, just as many pairs of jaws (7a,8a) are placed in the internal bore of each drum (29) in between: on one side, an annular member (12a,12b) of the drum (29) having a conical surface converging on the axis (3a) of the bar (3); and on the other side, the revolving end support (19a,19b) of the shaft (15).

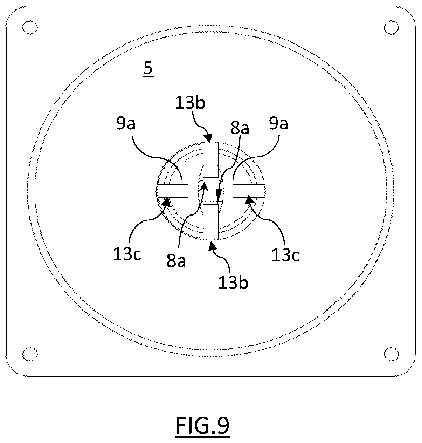

As can also be seen from the drawings in Figures 4 and 9, the arms (13a,13b;13c) have a plate-like shape with their outline extruding - in its flat plane - according to a wedge-shaped design. The wedge-shaped outline is congruent to the complementary design of the members (12a,12b) of the two cylindrical drums (29). Indeed, said members (12a,12b) have surfaces (17a,17b) complementing the wedge-shaped design, which wed to its wedge-shaped outline and also converge on the axis (3a) of the bar (3).

Due to their plate-like shape and due to the coupling with the member surfaces (17a,17b) which they come into contact with, two arms (13a,13b) are such that they develop along their own flat planes according to parallel planes (4z,4x), while the arms (13c) develop according to their own flat planes along a plane (4z,4y) transversal and orthogonal to the former.

Figure 5 also shows that elastically yielding stop means, preferably enacted by cylindrical springs (18a,18b) are interposed between the end supports (16a,16b) which transmit the thrust of the shaft (15) and the arms (13a,13b) which receive it.

A comparative look at Figures 5 and 7 shows that, in use, once the actuator (14) which moves the shaft (15) is activated, for example towards the centre line of the cylindrical shell (5) (Figure 7), the end support (16a) pushes in step against the springs (18a) and in opposition to the reaction of the annular surfaces (12a,12b). This leads to the translational sliding of the wedge-shaped arms (13a;13b). One such sliding component leads the arms (13a;13b) to approach the feeding line (4z). Simultaneously with such translation, and by action of the same and only actuator (14), the jaws (13a,13b) clench the outer surface of the bar (3) onto which it is interposed. The clenching occurs at two different bar (3) gripping zones (10a;10b).

Figure 6 shows that by equipping, for instance, the right clamp (11b) with a pair of additional arms (13c) on a plane orthogonal to that on which the arms (13a,13b) in Figures 5 and 7 lie, and by these additional arms (13c) also being attached to the same conical member (12b) of the right drum (29) in Figure 8, the same action by the shaft (15) enables the clenching of an additional pair of jaws (9a) operating along an axis (4y) orthogonal to the above mentioned first axes (4z, and 4x) (compare Figure 6 and 8).

Compared to the prior art, the support and gripping unit (2) described above offers numerous advantages to the bar feeder (1).

A first advantage of the presence of the bar (3) support and gripping unit (2) is that, due to the high flexural stiffness locally provided to the bar (3), its mere presence - including in the simplified embodiments designed to have only one clenching member (7;8) - creates a condition of greater hyperstaticity which, by producing a sort of section-breaking effect, reduces the free inflection length of the bar (3). This makes it possible to shift the condition triggering the flexural vibrations to a higher angular velocity of the machine tool spindle.

This effect, which is already positive in itself, is considerably increased given that, in addition to reducing the length of the free inflection section of the bar (3), the interlocking effect caused by the presence of the support and gripping unit (2) can also be intensified. Indeed - constructively speaking - by keeping the gripping zones (10a;10b) far enough from each other along the feeding line (4z), it is possible to significantly influence the interlocking effect by modulating their effectiveness according to need.

If we add, as is indeed the case in the example described, a third jaw (9a) perpendicular to the two pairs of jaws (7a,8a), the interlocking effect can be understood to transform from two-dimensional to three-dimensional, in such a way as to counteract the heeling of the bar (3) both in a vertical plane (4z,4x) and in a horizontal plane (4z,4y). This is particularly advantageous when it comes to further allaying the risk of flexural vibrations being triggered in a bar (3) with mass eccentricity and/or shape eccentricity.

A further advantage offered by the effective stiffness caused by the presence of the support and gripping unit (2) is the possibility for the lubrication system in channels fed by known feeding bars to also be removed. Indeed, conveniently modulating the section-break stiffener enables optimal binding conditions to be obtained for supporting the machined bar without having to rest it continuously on the channel of the bar feeder (1); this removes the need to counteract the effect of friction by using a lubricant.

Another, no less important advantage, of the invention is that, in any case, it allows clenching to be complete and optimal, in perfect alignment with the rotation axis of the machine tool spindle, and without the bars (3) sticking, whatever the shape and dimensions of the bar (3) guide channel. This removes the need to disassemble and reassemble channels of different shapes and sizes, or alternatively removes the need to put up with all drawbacks caused by the sticking caused by a bar (3) which is too small being guided along an overly wide channel.

In addition, the bar feeder (1) according to the invention is advantageously able to operate in optimal conditions with bars that are non-circular in shape, such as multi-sided bars, for example hexagonal or even rectangular, due also to the contribution of the springs (18a) present.

Indeed, assuming, for example, that a bar (3) with a rectangular cross-section is to be machined, where two jaws operating on the larger dimension of the bar (3) reach the clenching position (for example, the jaws (13a,13b)), while the jaws (13c) hypothetically intended to clench the smaller dimension of the bar (3) remain open and detached, the thrust action of the actuator (15) through the still open jaws (13c).continues unhindered. Indeed, where the jaws (13a,13b) are already in the clenching position, the springs (18a), with their ability to elastically deform, give way under the load, thus meaning that said clenched jaws (13a,13b) can be prevented from rigidly inhibiting the shaft (14) from continuing its movement, which is still necessary to complete the clenching action of the jaws (13c) remaining open. In other words, the springs (18a) allow the jaws, which are entirely activated by a single actuator (15), to close sequentially. This is made evident, for instance, in Figure 9, where jaws (13a,13b) are seen to clench first, whereas jaws (13c) are clenched second. Therefore, even in the presence of bars with non-circular outlines, parts with different cross-sections are always clenched completely and in optimal conditions. This evidently allows the machine tool to operate at the highest operating speeds even for thin bars and/or non-circular cross-sections.

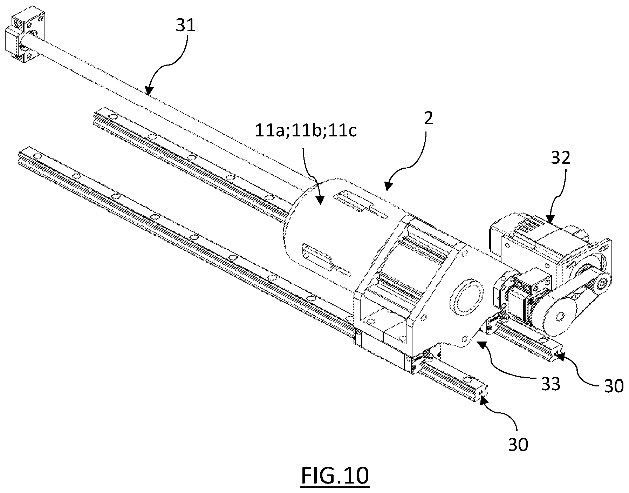

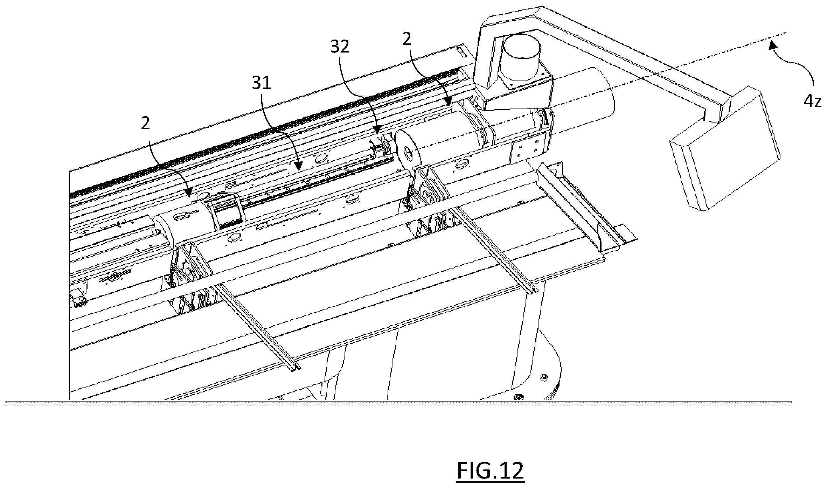

Many variations can be made to the invention without departing from the scope of the following claims. One of these variations is illustrated, as a non-limitative example only, in Figures 10, 11 and 12.

Figure 10 shows that a bar (3) support and gripping unit (2) - having preferably, but not limited to, a single tube-shaped clamp (11a;11b;11c) - is mounted on a carriage (33) supported by a pair of linear guides (30) parallel to the feeding line (4z), being movable therein in both of its directions upon the activation of the relative motorisation means (31,32), which include a screw and nut mechanism (31) joined to the frame of the carriage (33) and controlled by a gearmotor (32).

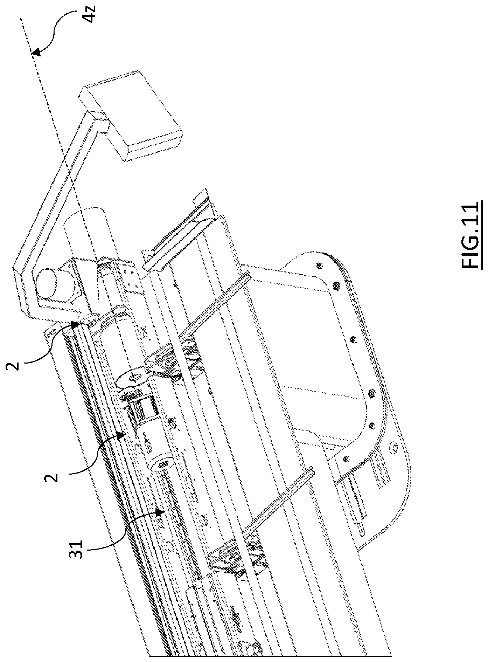

The bar (3) can also be allowed to move along the feeding line (4z) integrally with the carriage (33), by means of appropriately coordinated commands in the time phase between: (i) the controlled translation of the unit (2); (ii) the temporary clenching or unclenching of the bar (3) by the jaws of the clamp (or the clamps) (7a; 8a; 9a) themselves or by those of any other similar units (2) that may be present (such as in Figures 10,11); or (iii) also in connection with the clenching or unclenching of the bar (3) by the lathe spindle.

In this way, the support unit (2) in Figure 10 can therefore have the dual abilities to, on the one hand: (i) be locatable along the bar (3) to assume the locally defined position where it optimally helps to bind the bar (3) by influencing its free inflection lengths which, as mentioned above, affect the vibration of the bar (compare Figures 10,11); and, on the other hand: (ii) perform the task of positioning the bar (3) longitudinally relative to the spindle. Indeed, once it has gripped the bar (3), the unit (2), by translating along the guides (30), is able to determine the length of the portion of the bar (3) which should extend cantilever-style into the machining section of the machine tool.

The unit (2) which is movable on the carriage (33) in Figures 10, 11 and 12, thus replacing other parts of the machine tool set up for this purpose (for example, "ferrule" and "stop", which are well known to persons skilled in the art), reproduces, just as precisely, the same functionality as these other parts, yet with a decidedly higher activation speed. This allows the operator to combine all the advantages specific to the unit (2) according to the invention, as well as offering the added advantage of being able to perform the indispensable positioning operations which characterise the time frame between the machining of two consecutive bar (3) sections, with a considerable saving in terms of cycle time and, therefore, a significant reduction in machining costs.

## Claims

1. A bar (**3**) support and gripping unit feeding, in axial succession to one another, a machine tool feeding line (**4**z), comprising:
at least one tubular-shaped clamp (**11**a;**11**b;**11**c) assembly, extending parallel to the feeding line (**4**z); the clamp (**11**a;**11**b;**11**c) assembly being attachable to the periphery of a bar (**3**) which passes through a through-bore (**6**) inside the clamp (**11**a;**11**b;**11**c) assembly, the axis (**3**a) of the bar (**3**) coinciding with the axis of the tubular bore (**6**); and
at least one chucking member (**7;8**) provided with at least one pair of jaws (**7**a;**8**a;**9**a) which can clench the bar (**3**), in at least one gripping zone (**10**a;**10**b;**10**bc) located along the line (**4z**), said at least one chucking member (**7;8**) including an actuator (**14**) and at least one step bearing (16a;16b) attachable to at least one arm (**13**a;**13**b;**13**c) of said at least one clamp (**11**a;**11**b;**11**c), said chucking member (**7;8**) being capable of rendering said at least one clamp (**11**a;**11**b;**11**c) and said bar (**3**) mutually integral,
said support and gripping unit (**2**) being **characterised in that** said actuator (**14**) includes a tubular shaft (**15**), crossed axially by said bar (**3**) and which is movably translatable in both directions of the relative axis line (**3**a); said one or each step bearing (16a;16b) being mounted on the shaft (**15**), shouldered against at least one arm (**13**a;**13**b;**13**c) of said at least one clamp (**11**a;**11**b;**11**c).

2. A support and gripping unit according to claim **1**, **characterised in that** said at least one chucking member (**7;8**) is contained within the internal bore (**6**) of said at least one clamp (**11**a;**11**b;**11**c).

3. A support and gripping unit according to claim **1** or **2**, **characterised in that** said at least one chucking member (**7**;**8**) includes at least one pair of jaws (**7**a;**8**a;**9**a), which have gripping surfaces shaped to have a profile which wraps around the outside of the bar (**3**) and which are movable in transversal directions (**4**x;**4**y) to the line (**4**z).

4. A support and gripping unit according to claim **3**, **characterised in that** said at least one clamp (**11**a;**11**b;**11**c) includes at least one thrust-bearing annular member (**12**a;**12**b) and at least one wedge-shaped arm (**13**a;**13**b;**13**c), supporting at least one pair of jaws (**7**a;**8**a;**9**a), interposed between said at least one annular member (**12**a;**12**b) and the bar (**3**) and coupled axially and in a guide with at least one surface (**17**a;**17**b) complementing the annular member (**12**a;**12**b), which converges on the axis (**3**a) of the bar (**3**).

5. A support and gripping unit according to claim **1**, **characterised in that** said actuator (**14**) can be activated using a fluid.

6. A support and gripping unit according any of the preceding claims, **characterised in that** said at least one chucking member (**7**;**8**) comprises elastically yielding stop means (**18**a;**18**b) operated by said actuator (**14**) and in response to the clenching action of at least one pair of jaws (**7**a;**8**a;**9**a) of said one or each chucking member (**7**;**8**) .

7. A support and gripping unit according to any of the preceding claims, **characterised in that** it comprises at least two said clamps (**11**a;**11**b;**11**c) arranged consecutively to one another along the feeding line (**4**z) .

8. A unit according to claim **7, characterised in that** said two clamps (**11**a;**11**b;**11**c) combine to clench a bar (**3**) using at least two said arms (**13**a;**13**b;**13**c) operating along a plane (4**z**,**4**x).

9. A unit according to claims **6** or **7** or **8**, **characterised in that** at least two said arms **(13;13**b**;13**c**)** operate on reciprocally transversal planes (**4**z,**4**x;**4**z,**4**y).

10. A unit according to one of claims **6** to **9, characterised in that** it comprises three said arms (**13**a;**13**b;**13**c) positioned along the outside of the bar (**3**) in at least one bar (**3**) gripping zone (**10**a;**10**b;**10**c).

11. A unit according to claim **1, characterised in that** said actuator (**14**) is unique to said at least one clamp (**11**a; **11**b; **11**c).

12. A support and gripping unit according to any of the preceding claims, **characterised in that** said at least one chucking member (**7;8**) can be remote controlled.

13. A support and gripping unit according to any of the preceding claims, **characterised in that** it comprises at least one carriage (**33**) supporting at least one said clamp (**11**a;**11**b;**11**c); guides (**30**) supporting said carriage (**33**); and means for motorising **(31;32)** said one or each carriage (**33**) along the guides (**4**z).

14. A bar feeder **(3) characterised in that** it comprises at least one bar (**3**) support and gripping unit (**2**), as defined in at least one of the preceding claims.

## Patentansprüche

1. Eine Stütz- und Greifeinheit für Stangen (**3**), in axialer Reihenfolge nacheinander eine Beschickungslinie für Werkzeugmaschinen (**4**z) beschickend, Folgendes beinhaltend:
mindestens eine rohrförmige Klemmengruppe (**11**a;**11**b;**11**c), die sich parallel zur Beschickungslinie (**4**z) erstreckt; die Klemmengruppe (**11**a;**11**b;**11**c) ist dabei am Rand einer Stange (**3**) befestigbar, die durch eine Durchgangsbohrung (**6**) in der Klemmengruppe (**11**a;**11**b;**11**c) durchgesteckt ist, die Achse (**3**a) der Stange (**3**) stimmt dabei mit der Achse der rohrförmigen Bohrung (**6**) überein; und
mindestens ein Spannglied (**7;8**), das mit mindestens einem Spannbackenpaar (**7**a;**8**a;**9**a) ausgestattet ist, das die Stange (**3**) in mindestens einem Greifbereich (**10**a;**10**b;**10**bc), der sich auf der Linie (**4**z) befindet, festspannen kann, besagtes mindestens ein Spannglied (**7;8**) beinhaltet dabei einen Stellantrieb (**14**) und mindestens ein Stützlager (**16**a; **16**b), das an mindestens einem Arm (**13**a;**13**b;**13**c) der besagten mindestens einen Klemme (**11**a;**11**b;**11**c) befestigbar ist, besagtes Spannglied (**7;8**) ist dabei imstande, besagte mindestens eine Klemme (**11**a;**11**b;**11**c) und besagte Stange (**3**) gegenseitig zu integrieren,
besagte Stütz- und Greifeinheit (**2**) ist dabei **dadurch gekennzeichnet, dass** besagtes Stellglied (**14**) eine Hohlwelle (**15**) beinhaltet, die axial von besagter Stange (**3**) gekreuzt wird und die beweglich in beide Richtungen der entsprechenden Achsenlinie (**3**a) verschiebbar ist; besagtes ein oder jedes Stützlager (**16**a; **16**b) ist dabei an der Welle (1**5)** montiert, gegen mindestens einen Arm (**13**a;**13**b;**13**c) der besagten mindestens einen Klemme (**11**a;**11**b;**11**c) geschultert.

2. Eine Stütz- und Greifeinheit nach dem Patentanspruch **1, gekennzeichnet dadurch, dass** besagtes mindestens ein Spannglied (**7**;**8**) in der Innenbohrung (**6**) der besagten mindestens einen Klemme (**11**a;**11**b;**11**c) enthalten ist.

3. Eine Stütz- und Greifeinheit nach dem Patentanspruch **1** oder **2**, **gekennzeichnet dadurch, dass** besagtes mindestens ein Spannglied (**7;8**) mindestens ein Paar Spannbacken (**7**a;**8**a;**9**a) beinhaltet, die Greifflächen haben, die so geformt sind, dass sie ein Profil haben, das die Außenseite der Stange (**3**) umfasst und die in Querrichtungen (**4**x;**4**y) zur Linie (**4**z) beweglich sind.

4. Eine Stütz- und Greifeinheit nach dem Patentanspruch **3**, **gekennzeichnet dadurch, dass** besagte mindestens eine Klemme (**11**a;**11**b;**11**c) mindestens ein ringförmiges Drucklagerglied (**12**a;**12**b) und mindestens einen keilförmigen Arm (**13**a;**13**b;**13**c) beinhaltet, dabei mindestens ein Klemmenpaar (**7**a;**8**a;**9**a) tragend, eingefügt zwischen besagtem mindestens einem ringförmigen Glied (**12**a;**12**b) und der Stange (**3**) und axial und in einer Führung mit mindestens einer Oberfläche (**17**a;**17**b) gekoppelt, dabei das ringförmige Glied (**12**a;**12**b) ergänzend, das an der Achse (**3**a) der Stange (**3**) zusammenläuft.

5. Eine Stütz- und Greifeinheit nach dem Patentanspruch **1, gekennzeichnet dadurch, dass** besagter Stellantrieb (**14**) unter Verwendung einer Flüssigkeit aktiviert werden kann.

6. Eine Stütz- und Greifeinheit nach jedem der vorigen Patentansprüche, **gekennzeichnet dadurch, dass** besagtes mindestens ein Spannglied (**7;8**) elastisch nachgebende Stoppermittel (**18**a;**18**b) beinhaltet, die von besagtem Stellantrieb (**14**) und als Reaktion auf die Klemmwirkung von mindestens einem Spannbackenpaar (**7**a;**8**a;**9**a) des besagten einen oder jedes Spannglieds (**7;8**) angetrieben werden.

7. Eine Stütz- und Greifeinheit nach jedem der vorigen Patentansprüche, **gekennzeichnet dadurch, dass** sie mindestens zwei besagte Klemmen (**11**a;**11**b;**11**c) beinhaltet, die aufeinander folgend auf der Beschickungslinie (**4**z) angeordnet sind.

8. Eine Einheit nach dem Patentanspruch **7**, **gekennzeichnet dadurch, dass** sich besagte zwei Klemmen (**11**a;**11**b;**11**c) verbinden, um eine Stange (**3**) festzuspannen, dabei mindestens zwei besagte Arme (**13**a;**13**b;**13**c), auf einer Ebene (**4**z,**4**x) wirkend, verwendend.

9. Eine Einheit nach den Patentansprüchen **6** oder **7** oder **8, gekennzeichnet dadurch, dass** mindestens zwei besagte Arme (**13**a;**13**b;**13**c) auf zueinander quer stehenden Ebenen (**4**z,**4**x;**4**z,**4**y) wirken.

10. Eine Einheit nach einem der Patentansprüche **6** bis **9, gekennzeichnet dadurch, dass** sie drei besagte Arme (**13**a;**13**b;**13**c) beinhaltet, die an der Außenseite der Stange (**3**) in mindestens einem Greifbereich (**10**a;**10**b;**10**c) der Stange (**3**) positioniert sind.

11. Eine Einheit nach dem Patentanspruch **1**, **gekennzeichnet dadurch, dass** besagter Stellantrieb (**14**) der einzige für besagte mindestens eine Klemme (**11**a;**11**b;**11**c) ist.

12. Eine Stütz- und Greifeinheit nach jedem der vorigen Patentansprüche, **gekennzeichnet dadurch, dass** besagtes mindestens ein Spannglied (**7;8**) ferngesteuert werden kann.

13. Eine Stütz- und Greifeinheit nach jedem der vorigen Patentansprüche, **gekennzeichnet dadurch, dass** sie mindestens einen Wagen (**33**) beinhaltet, der mindestens eine besagte Klemme (**11**a;**11**b;**11**c) trägt; Führungen (**30**), die besagten Wagen (**33**) tragen; und Mittel zur Motorisierung (**31;32**) besagten eines oder jedes Wagens (**33**) auf den Führungen (**4**z).

14. Eine Stangenbeschickung (**3**), **gekennzeichnet dadurch, dass** sie mindestens eine Stütz- und Greifeinheit (**2**) beinhaltet, wie sie in mindestens einem der vorigen Patentansprüche definiert ist.

## Revendications

1. Groupe de support et de préhension de barres (3) alimentant, en succession axiale les unes des autres, une ligne (4z) d'alimentation d'une machine-outil, comprenant :
au moins un ensemble pinces (11a ; 11b ; 11c) de forme tubulaire, s'étendant parallèlement à la ligne d'alimentation (4z) ; l'ensemble pinces (11a ; 11b ; 11c) pouvant être associé à la périphérie d'une barre (3) qui passe à travers un alésage traversant (6) à l'intérieur de l'ensemble pinces (11a ; 11b ; 11c), l'axe (3a) de la barre (3) coïncidant avec l'axe de l'alésage tubulaire (6) ; et
au moins un organe de serrage (7 ; 8) muni d'au moins une paire de mâchoires (7a ; 8a ; 9a) qui peuvent enserrer la barre (3), dans au moins une zone de préhension (10a ; 10b ; 10bc) située le long de la ligne (4z), ledit au moins un organe de serrage (7 ; 8) comprenant un actionneur (14) et au moins une crapaudine (16a ; 16b) pouvant être associée à au moins un bras (13a ; 13b ; 13c) de ladite au moins une pince (11a ; 11b ; 11c), ledit organe de serrage (7 ; 8) étant destiné à rendre ladite au moins une pince (11a ; 11b ; 11c) et ladite barre (3) mutuellement solidaires,
ledit groupe (2) de support et de préhension étant **caractérisé en ce que** ledit actionneur (14) comprend un arbre tubulaire (15), traversé axialement par ladite barre (3) et qui peut être déplacé en translation dans les deux sens de la ligne d'axe (3a) relative ; ladite une ou chaque crapaudine (16a ; 16b) étant montée sur l'arbre (15), en épaulement contre au moins un bras (13a ; 13b ; 13c) de ladite au moins une pince (11a ; 11b ; 11c).

2. Groupe de support et de préhension selon la revendication 1, **caractérisé en ce que** ledit au moins un organe de serrage (7 ; 8) est contenu dans l'alésage intérieur (6) de ladite au moins une pince (11a ; 11b ; 11c) .

3. Groupe de support et de préhension selon la revendication 1 ou 2, **caractérisé en ce que** ledit au moins un organe de serrage (7 ; 8) comprend au moins une paire de mâchoires (7a ; 8a ; 9a), qui ont des surfaces de préhension profilées de manière à avoir un profil qui entoure l'extérieur de la barre (3) et qui sont mobiles dans des directions (4x ; 4y) transversales à la ligne (4z) .

4. Groupe de support et de préhension selon la revendication 3, **caractérisé en ce que** ladite au moins une pince (11a ; 11b ; 11c) comprend au moins un organe annulaire de butée (12a ; 12b) et au moins un bras (13a ; 13b ; 13c) en forme de coin, supportant au moins une paire de mâchoires (7a ; 8a ; 9a), interposée entre ledit au moins un organe annulaire (12a ; 12b) et la barre (3) et accouplée axialement et dans un guide avec au moins une surface (17a ; 17b) complémentaire de l'organe annulaire (12a ; 12b), qui converge sur l'axe (3a) de la barre (3).

5. Groupe de support et de préhension selon la revendication 1, **caractérisé en ce que** ledit actionneur (14) peut être activé au moyen d'un fluide.

6. Groupe de support et de préhension selon l'une quelconque des revendications précédentes, **caractérisé en ce que** ledit au moins un organe de serrage (7 ; 8) comprend des moyens d'arrêt (18a ; 18b) pouvant céder élastiquement actionnés par ledit actionneur (14) et en réponse à l'action de serrage d'au moins une paire de mâchoires (7a ; 8a ; 9a) dudit un ou chaque organe de serrage (7 ; 8).

7. Groupe de support et de préhension selon l'une quelconque des revendications précédentes, **caractérisé en ce qu'**il comprend au moins deux desdites pinces (11a ; 11b ; 11c) qui sont disposées l'une à la suite de l'autre le long de la ligne d'alimentation (4z).

8. Groupe selon la revendication 7, **caractérisé en ce que** lesdites deux pinces (11a ; 11b ; 11c) se combinent pour enserrer une barre (3) en utilisant au moins deux desdits bras (13a ; 13b ; 13c) opérant le long d'un plan (4z, 4x).

9. Groupe selon les revendications 6 ou 7 ou 8, **caractérisé en ce qu'**au moins deux desdits bras (13 ; 13b ; 13c) opèrent sur des plans (4z,4x ; 4z,4y) réciproquement transversaux.

10. Groupe selon l'une des revendications de 6 à 9, **caractérisé en ce qu'**il comprend trois desdits bras (13a ; 13b ; 13c) qui sont positionnés le long de l'extérieur de la barre (3) dans au moins une zone (10a ; 10b ; 10c) de préhension de la barre (3).

11. Groupe selon la revendication 1, **caractérisé en ce que** ledit actionneur (14) est unique pour ladite au moins une pince (11a ; 11b ; 11c).

12. Groupe de support et de préhension selon l'une quelconque des revendications précédentes, **caractérisé en ce que** ledit au moins un organe de serrage (7 ; 8) peut être commandé à distance.

13. Groupe de support et de préhension selon l'une quelconque des revendications précédentes, **caractérisé en ce qu'**il comprend au moins un chariot (33) supportant au moins ladite une pince (11a ; 11b ; 11c) ; des guides (30) supportant ledit chariot (33) ; et des moyens (31 ; 32) de motorisation dudit un ou chaque chariot (33) le long des guides (4z).

14. Un chargeur de barres (3), **caractérisé en ce qu'**il comprend au moins un groupe (2) de support et de préhension de barres (3), tel que défini dans au moins une des revendications précédentes.
